# EUROPÄISCHE PATENTSCHRIFT

(11) **EP 1 003 663 B1**
(45) Veröffentlichungstag und Bekanntmachung des Hinweises auf die Patenterteilung: **06.10.2004**
(21) Anmeldenummer: 99939322.6
(22) Anmeldetag: 15.06.1999
(51) Int. Cl.: B62B 5/00, B62B 3/14

(54) **VON HAND BEWEGBARER TRANSPORTWAGEN**
MANUALLY MOVED PUSHCART
CHARIOT DE TRANSPORT DEPLACABLE MANUELLEMENT

(30) Priorität: 18.06.1998 DE 19827142
(43) Veröffentlichungstag der Anmeldung: 31.05.2000
(73) Patentinhaber: WANZL METALLWARENFABRIK GMBH, D-89336 Leipheim (DE)
(72) Erfinder: EBERLEIN, Herbert, D-89347 Bubesheim (DE); KRIZ, Peter, D-73235 Weilheim (DE)
(86) Internationale Anmeldenummer: PCT/DE1999/001741
(87) Internationale Veröffentlichungsnummer: WO 1999/065755

(56) Entgegenhaltungen:
- EP-A- 0 352 647
- EP-A- 0 769 286
- GB-A- 2 183 566
- GB-A- 2 286 567
- US-A- 4 221 273

## Beschreibung

Die Erfindung betrifft einen von Hand bewegbaren Transportwagen, der in einen gleichen Transportwagen platzsparend einschiebbar ist, wobei der Transportwagen ein mit vier Schwenkrollen ausgestattetes Fahrgestell aufweist und mit einer Schiebeeinrichtung und mit einer Abstelleinrichtung für Ware ausgestattet ist und wobei sich unterhalb der Abstelleinrichtung ein Tragabschnitt befindet, an dem wenigstens ein Laufrad angeordnet ist, das sich zwischen den beiden vorderen und den beiden hinteren Schwenkrollen befindet.

Transportwagen dieser Art sind in den europäischen Patentschriften 0 267 817 B1 und 0 352 647 B 1 näher beschrieben. Das wenigstens eine Laufrad wirkt bei Transportwagen dieser Art stabilisierend auf den Lenk- und Schiebevorgang. Ferner sind die Laufräder so angeordnet, daß sich die Transportwagen relativ eng ineinanderschieben lassen. In SB-Märkten läßt sich dadurch beim Abstellen oder Bereitstellen dieser Transportwagen in Reihen sehr viel Stellplatz einsparen. Die eben beschriebenen Vorteile haben dazu geführt, daß diese Transportwagen sehr beliebt sind. Allerdings muß bei solchen Transportwagen, so diese schwer beladen sind, die gleiche Schiebekraft aufgewendet werden, wie bei Transportwagen, die mittig kein Laufrad aufweisen. Man hat deshalb Transportwagen entwickelt, die mit vier Rädern und/oder Schwenkrollen ausgestattet sind und die eine ansteuerbare, elektromotorisch wirkende Antriebseinheit aufweisen, die über die Räder oder über ein weiteres Antriebsrad wirkend zum Antreiben oder Bewegen der Transportwagen bestimmt ist. Einer von vielen Transportwagen dieser Art ist beispielsweise in der DE 196 14 411 A1 beschrieben. Die Antriebseinheit wirkt dabei unterstützend beim Schieben eines schwer beladenen Transportwagens von Hand. Die zuletzt genannten Transportwagen lassen sich jedoch nicht platzsparend ineinanderschieben.

Die Aufgabe der Erfindung besteht darin, einen Transportwagen der gattungsgemäßen Art so weiterzuentwickeln, daß bei Inanspruchnahme der bekannten Vorteile, die durch ein mittig angeordnetes Laufrad, durch die Ineinanderschiebbarkeit der Wagen und durch die Verwendung einer ansteuerbaren Antriebseinheit erzielbar sind, keine Beeinträchtigung der Ineinanderschiebbarkeit des Transportwagens mit einem weiteren gleichen Transportwagen eintritt.

Die Lösung der Aufgabe besteht darin, daß am Tragabschnitt eine von einer Stromquelle gespeiste elektromotorische Antriebseinheit vorgesehen ist, die zum Antreiben des wenigstens einen Laufrades bestimmt ist und daß die Stromquelle am Transportwagen in wenigstens einem der Räume angeordnet ist, die ein einzuschiebender Transportwagen beim Einschiebevorgang nicht beansprucht.

Es ist von Vorteil, die. Antriebseinheit am ohnehin vorhandenen Tragabschnitt anzuordnen, da sich dort das Laufrad befindet. Ist der Tragabschnitt um eine horizontale Achse schwenkbar angeordnet, trägt das Gewicht der Antriebseinheit dazu bei, das Laufrad noch stärker gegen den Boden zu pressen, so daß die Antriebskraft des Laufrades erhöht wird. Zweckmäßig ist ferner, die üblicherweise durch Batterien gebildete Stromquelle in jenen Räumen anzuordnen, die bei zwei ineinandergeschobenen Transportwagen von einem der beiden Transportwagen nicht beansprucht werden. Solche Bereiche befinden sich üblicherweise unterhalb der Abstelleinrichtung im vorderen Bereich der Fahrgestelle und im hinteren Bereich unterhalb der Schiebeeinrichtung, jedoch in letzterem Falle höher als die Abstelleinrichtung angeordnet. Die Stromquelle und die Antriebseinheit beeinträchtigen somit weder das platzsparende Ineinanderschieben der Transportwagen, noch beanspruchen sie einen Platz oder Raum auf oder an der Abstelleinrichtung.

Die Erfindung wird anhand von Ausführungsbeispielen näher erläutert, wobei sich die Ausführungsbeispiele bevorzugt an der Bauweise jener Transportwagen orientieren, die in den eingangs genannten europäischen Patentschriften beschrieben sind.

Es zeigt
Fig. 1 einen Transportwagen mit schwenkbarem Tragabschnitt;
Fig. 2 zwei solche Transportwagen in Draufsicht und ineinandergeschoben;
Fig. 3 einen Transportwagen mit ortsfest angeordnetem Tragabschnitt sowie
Fig. 4 den in Fig. 3 dargestellten Transportwagen in Draufsicht.

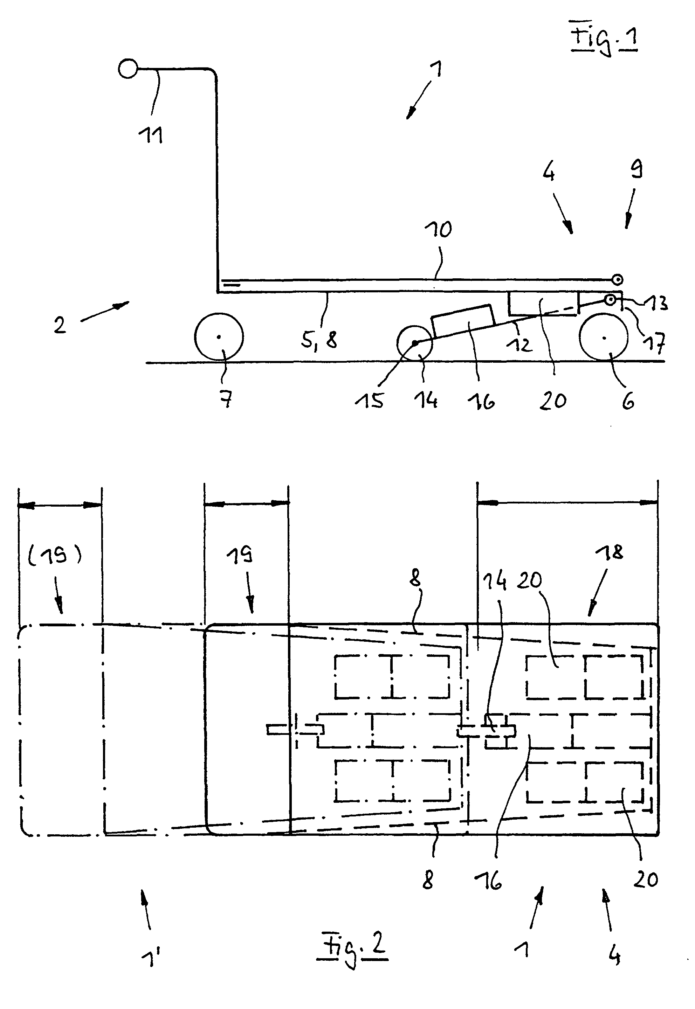

Der in Fig. 1 dargestellte Transportwagen 1 ist in bekannter Weise so gestaltet, daß er in einen gleichen Transportwagen 1 platzsparend einschiebbar ist. Sein mit vier Schwenkrollen 6, 7 ausgestattetes Fahrgestell 5 ist deshalb konisch ausgebildet und seine zum Abstellen von Ware bestimmte Abstelleinrichtung 10, z.B. eine Ladeplattform, ist anhebbar am Fahrgestell befestigt. Am hinteren Ende 2 des Transportwagens 1 ist eine nach hinten gerichtete Schiebeeinrichtung 11 angeordnet. Unterhalb der Abstelleinrichtung 10 und zwischen den Längsholmen 8 des Fahrgestelles 5 angeordnet befindet sich ein Tragabschnitt 12, der am vorderen Ende 9 des Fahrgestelles 5 um eine horizontale Achse 13 schwenkbar gelagert ist. Der Tragabschnitt 12 ist zum Tragen eines Laufrades 14 bestimmt, dessen Achse 15 sich quer zur Längsrichtung des Transportwagens 1 erstreckt. Das Laufrad 14 befindet sich, bevorzugt mittig angeordnet, zwischen den vorderen und den hinteren Schwenkrollen 6, 7. Am Tragabschnitt 12 ist eine von einer Stromquelle 20 gespeiste elektromotorische Antriebseinheit 16 vorgesehen, die zum Antreiben des Laufrades 14 bestimmt ist. Das Antreiben des Laufrades 14 kann beispielsweise über zwei Zahnräder oder über ein Reibrad geschehen. Als bevorzugte Ausführungsform bietet sich jedoch eine Antriebseinheit 16 an, bei welcher der Antriebsmotor und das wenigstens eine Laufrad 14 zu einer einzigen Baugruppe vereint sind. Im vorderen Bereich 4 des Transportwagens 1 ist unterhalb der Abstelleinrichtung 10 die Stromquelle 20 angeordnet. Die üblicherweise aus aufladbaren Batterien gebildete Stromquelle 20 ist längs zumindest an einer der beiden Seiten des Tragabschnittes 12 am Fahrgestell 5 befestigt.

Fig. 2 zeigt in einer Draufsicht zwei platzsparend ineinandergeschobene Transportwagen 1, 1' entsprechend Fig. 1. Der links dargestellte hintere Transportwagen 1' ist in den rechts dargestellten vorausbefindlichen Transportwagen 1 platzsparend eingeschoben. Da die Transportwagen 1, 1' nur ein Stück weit ineinander einschiebbar sind, verbleiben Räume 18, 19, die nur von einem der beiden Transportwagen 1 oder 1' beansprucht werden. In der Fachsprache werden die Räume 18, 19 auch als "Stapeltoträume" bezeichnet. In der Zeichnung sind die Räume 18, 19 durch die beiden Doppelpfeile kenntlich gemacht. Der Raum 18 befindet sich im vorderen Bereich 4 des Transportwagens 1, während der hintere Raum 19 sich unterhalb der Schiebeeinrichtung 11 erstreckt. In der Zeichnung erkennt man deutlich, daß sich die zu beiden Seiten des Tragabschnittes 12 angeordnete Stromquelle 20 im Raum 18 befindet. Der Raum 18 wird vom eingeschobenen Transportwagen 1' nicht beansprucht. Es bleibt somit Platz für das zweckmäßige Unterbringen der Stromquelle 20 am Transportwagen 1. In vorteilhafter Weise befindet sich auch die Antriebseinheit 16 im Raum 18, so daß ein engstmögliches Ineinanderschieben von Transportwagen 1,1' garantiert ist. Ergänzend sei noch vermerkt, daß an jedem Transportwagen 1, 1' eine zum Anheben des Tragabschnittes 12 bestimmte Vorrichtung 17, siehe Fig. 1, vorgesehen sein kann, beispielsweise so, wie dies in der EP 0 352 647 B1 beschrieben ist.

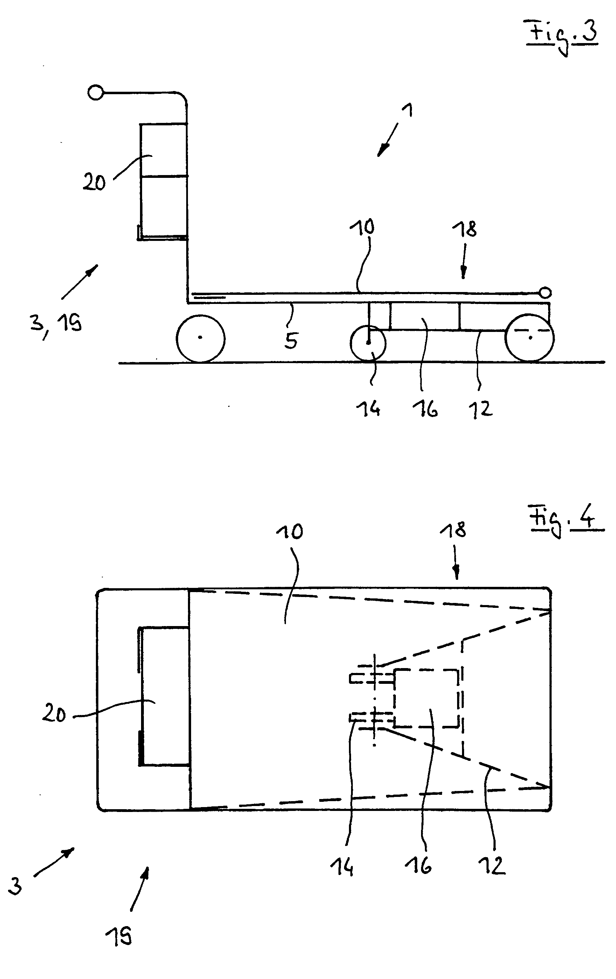

Fig. 3 und Fig. 4 zeigen einen Transportwagen 1, dessen Fahrgestell 5 und dessen Tragabschnitt 12 so gestaltet sein können, wie dies in der EP 0 267 817 B1 offenbart ist. Der Tragabschnitt 12 ist ortsfest am Fahrgestell angeordnet. Anstelle von nur einem Laufrad 14 sind in äquivalenter Weise zwei Laufräder 14 vorgesehen. Am Tragabschnitt 12 und innerhalb des Raumes 18 angeordnet ist wieder eine Antriebseinheit 16 vorgesehen, die auf die vorab beschriebene Weise zum Antreiben von mindestens einem der beiden Laufräder 14 bestimmt ist. Die Antriebseinheit 16 befindet sich im Raum 18, während die Stromquelle 20 bei diesem Ausführungsbeispiel im Raum 19 angeordnet ist, der sich im hinteren Bereich 3 des Transportwagens 1 unterhalb der Schiebeeinrichtung 11 erstreckt, und höher als die Abstelleinrichtung 10 angeordnet ist. Auch bei diesem Ausführungsbeispiel befinden sich die Stromquelle 20 und die Antriebseinheit 16 innerhalb von wenigstens einem der Räume 8, 19, die ein einzuschiebender Transportwagen 1' beim Einschiebevorgang nicht beansprucht. Allgemein kann die Stromquelle 20 auch in beiden Räumen 18, 19 angeordnet sein.

## Patentansprüche

1. Von Hand bewegbarer Transportwagen (1), der in einen gleichen Transportwagen (1) platzsparend einschiebbar ist, wobei der Transportwagen (1) ein mit vier Schwenkrollen (6, 7) ausgestattetes Fahrgestell (5) aufweist und mit einer Schiebeeinrichtung (11) und mit einer Abstelleinrichtung (10) für Ware ausgestattet ist und wobei sich unterhalb der Abstelleinrichtung (10) ein Tragabschnitt (12) befindet, an dem wenigstens ein Laufrad angeordnet ist, das sich zwischen den beiden vorderen und den beiden hinteren Schwenkrollen (6, 7) befindet, **dadurch gekennzeichnet, daß** am Tragabschnitt (12) eine von einer Stromquelle (20) gespeiste elektromotorische Antriebseinheit 16) vorgesehen ist, die zum Antreiben des wenigstens einen Laufrades (14) bestimmt ist und daß die Stromquelle (20) am Transportwagen in wenigstens einem der Räume (18, 19) angeordnet ist, die ein einzuschiebender Transportwagen (1') beim Einschiebevorgang nicht beansprucht.

2. Von Hand bewegbarer Transportwagen nach Anspruch 1, **dadurch gekennzeichnet, daß** sich der Raum (18), unterhalb der Abstelleinrichtung (10) gelegen, im vorderen Bereich (4) des Transportwagens (1) erstreckt.

3. Von Hand bewegbarer Transportwagen nach Anspruch 1 oder 2, **dadurch gekennzeichnet, daß** sich der Raum (19) im hinteren Bereich (3) des Transportwagens (1) und höher als die Abstelleinrichtung (10) gelegen unterhalb der Schiebeeinrichtung (11) erstreckt.

4. Von Hand bewegbarer Transportwagen nach einem der Ansprüche 1 bis 3, **dadurch gekennzeichnet, daß** die Antriebseinheit (16) als eine einen Antriebsmotor und wenigstens ein Laufrad (14) aufweisende Baueinheit gestaltet ist.

5. Von Hand bewegbarer Transportwagen nach einem der Ansprüche 1 bis 4, **dadurch gekennzeichnet, daß** sich die Antriebseinheit (16) im Raum (18) befindet.

6. Von Hand bewegbarer Transportwagen nach einem der Ansprüche 1 bis 5, **dadurch gekennzeichnet, daß** die Stromquelle (20) im Bereich von wenigstens einer der beiden Seiten des Tragabschnittes (12) am Fahrgestell (5) angeordnet ist.

## Claims

1. A manually movable trolley (1) nestable with a like trolley (1) in a space-saving manner, wherein the trolley (1) has a wheel frame (5) fitted with four casters (6, 7) and is provided with a pushing arrangement (11) and an arrangement (10) on which goods may be deposited, and wherein a supporting portion (12), on which at least one running wheel is arranged, is located underneath the depositing arrangement (10), the running wheel being located between the two front and the two rear casters (6, 7), **characterised in that** an electromotive drive unit (16) powered by a current source (20) is provided on the supporting portion (12) and is intended to drive the at least one running wheel (16) [*sic* - 14], and **in that** the current source (20) is arranged on the trolley in at least one of the spaces (18, 19) not taken up during the nesting process by a trolley (1') to be pushed in.

2. A manually movable trolley according to claim 1, **characterised in that** the space (18) is located below the depositing arrangement (10) and extends in the front region (4) of the trolley (1).

3. A manually movable trolley according to claim 1 or 2, **characterised in that** the space (19) extends below the pushing arrangement (11) in the rear region (3) of the trolley (1) and is situated higher than the depositing arrangement (10).

4. A manually movable trolley according to any one of claims 1 to 3, **characterised in that** the drive unit (16) is formed as a structural unit comprising a drive motor and at least one running wheel (14).

5. A manually movable trolley according to any one of claims 1 to 4, **characterised in that** the drive unit (16) is arranged in the space (18).

6. A manually movable trolley according to any one of claims 1 to 5, **characterised in that** the current source (20) is arranged on the wheel frame (5) in the region of at least one of the two sides of the supporting portion (12).

## Revendications

1. Chariot de transport (1) déplaçable manuellement pouvant être emboîté dans un chariot de transport (1) identique afin de gagner de la place, sachant que le chariot de transport (1) présente un châssis (5) équipé de quatre roulettes pivotantes (6, 7) et est équipé d'une poignée (11) et d'un plateau (10) pour y déposer des marchandises, et que sous le plateau (10) se trouve un segment porteur (12) sur lequel est disposée au moins une roue de roulement qui se situe entre les deux roulettes pivotantes avant et les deux roulettes pivotantes arrière (6, 7), **caractérisé en ce qu'**une unité d'entraînement (16) électromécanique alimentée par une source de courant (20) est prévue sur le segment porteur (12), qui est destinée à entraîner au moins une roue de roulement (14), et **en ce que** la source de courant (20) du chariot de transport est disposée dans au moins l'un des espaces (18, 19) qu'un chariot de transport (1') à emboîter n'occupe pas une fois emboîté.

2. Chariot de transport déplaçable manuellement selon la revendication 1, **caractérisé en ce que** l'espace (18) situé sous le plateau (10) s'étend dans la partie avant (4) du chariot de transport (1).

3. Chariot de transport déplaçable manuellement selon la revendication 1 ou 2, **caractérisé en ce que** l'espace (19) situé dans la partie arrière (3) du chariot de transport (1), à un niveau plus élevé que le plateau (10), s'étend sous la poignée (11).

4. Chariot de transport déplaçable manuellement selon l'une des revendications 1 à 3, **caractérisé en ce que** l'unité d'entraînement (16) est conçue tel un module comportant un moteur d'entraînement et au moins une roue de roulement (14).

5. Chariot de transport déplaçable manuellement selon l'une des revendications 1 à 4, **caractérisé en ce que** l'unité d'entraînement (16) se trouve dans l'espace (18).

6. Chariot de transport déplaçable manuellement selon l'une des revendications 1 à 5, **caractérisé en ce que** la source de courant (20) est placée sur le châssis (5), dans la zone d'au moins l'un des deux côtés du segment porteur (12).
